# FASCICULE DE BREVET EUROPEEN

(11) **EP 1 055 592 B1**
(45) Date de publication et mention de la délivrance du brevet: **30.06.2004**
(21) Numéro de dépôt: 00401515.2
(22) Date de dépôt: 29.05.2000
(51) Int. Cl.: B62D 65/00

(54) **Procédé et dispositif d'ouverture et de maintien d'ouvrants latéraux de carrosserie automobile**
Verfahren und Vorrichtung zum Öffnen und Festhalten von Seitentüren einer Fahrzeugkarrosserie
Method and device for opening, and keeping open, the side doors of a vehicle body

(30) Priorité: 28.05.1999 FR 9906760
(43) Date de publication de la demande: 29.11.2000
(73) Titulaire: Renault s.a.s., 92100 Boulogne Billancourt (FR)
(72) Inventeur: Beville, Christian, 76430 Saint Romain de Colbosc (FR); Teisseyre, 92170 Vanves (FR)

(56) Documents cités:
- DE-A- 19 733 004
- US-A- 4 946 336
- PATENT ABSTRACTS OF JAPAN vol. 1997, no. 04, 30 avril 1997 (1997-04-30) -& JP 08 323275 A (SUZUKI MOTOR CORP), 10 décembre 1996 (1996-12-10)

## Description

La présente invention se rapporte au domaine technique des manipulations automatisées de carrosseries automobiles.

Plus précisément, elle concerne un procédé d'ouverture et de maintien dans une position d'ouverture déterminée d'ouvrants latéraux de carrosserie automobile et un dispositif de maintien de ces ouvrants en position ouverte.

Les carrosseries automobiles subissent, lors de leur réalisation, divers traitements de surface, en particulier des traitements par cataphorèse. Lors de tels traitements, un convoyeur aérien amène, dans une cuve de traitement, la carrosserie mise en place sur un support appelé luge.

Lors du traitement, il est nécessaire de maintenir les ouvrants latéraux de la carrosserie dans une position semi-ouverte, pour favoriser l'immersion de la carrosserie, éviter un flottement de celle-ci dans la cuve, et faciliter la pénétration des produits actifs des bains à l'intérieur des corps creux de la carrosserie.

La position semi-ouverte des ouvrants est généralement adaptée pour être suffisante pour éviter tout égouttement des ouvrants sur les bas de caisse de la carrosserie, sans être trop importante pour éviter d'augmenter inutilement l'encombrement transversal du véhicule et donc la largeur du bain de cataphorèse.

Habituellement, l'ouverture des ouvrants et leur maintien en position ouverte sont réalisés au moyen d'épingles métalliques. La mise en place de ces épingles est effectuée manuellement, et elles sont enlevées à l'issue du traitement. Elles peuvent être recyclées en vue d'une réutilisation, ce qui nécessite alors leur nettoiement à une fréquence déterminée.

L'utilisation d'épingles ne permet pas une automatisation complète de l'ouverture et du maintien dans une position d'ouverture déterminée des ouvrants de la carrosserie.

Le document DE-19733004-A1 décrit un procédé pour peindre les caisses d'un véhicule selon le préambule de la revendication 1 ou 7, procédé dans lequel la position ouverte ou fermée de la porte est obtenue au moyen d'un outil possédant des bras dont les extrémités se placent dans la rainure prévue pour le coulissement de la fenêtre. Mais cet outil est un élément non solidaire de la chaîne de transport de la caisse, et doit être monté indépendamment du moyen de transport.

La présente invention vise à résoudre ce problème. Dans ce but, elle propose un procédé d'ouverture et de maintien latéraux de carrosserie automatiques, dans lequel, préalablement à la mise en place de la carrosserie sur la luge, les ouvrants latéraux sont amenés, dans une position d'ouverture déterminée, par un système automatique d'ouverture d'ouvrants, puis sont maintenus, en position ouverte, lors de la mise en place de la carrosserie sur la luge, par la coopération, avec lesdits ouvrants, de moyens de blocage, portés par ladite luge.

Préférentiellement, le maintien des ouvrants latéraux est réalisé par l'introduction, dans la position ouverte déterminée, dans des ouvertures pratiquées sur les ouvrants latéraux, d'éléments en saillie du système de maintien. Pour chaque ouvrant latéral, l'ouverture peut être réalisée sur le bas de l'ouvrant, ou sur sa partie verticale, à l'intérieur ou à l'extérieur de la porte.

Selon une autre caractéristique, le système automatique d'ouverture d'ouvrants comprend des ventouses.

Selon une autre caractéristique, le système automatique d'ouverture d'ouvrants amène les ouvrants latéraux dans une position d'ouverture déterminée au moyen de crochets venant se prendre dans la fente de passage de l'ouvrant.

L'invention propose aussi un dispositif de support de carrosserie automobile, c'est-à-dire une luge, comportant des moyens pour maintenir, dans une position ouverte déterminée, les ouvrants de la carrosserie automobile. De préférence, les moyens de maintien en position ouverte des ouvrants de la carrosserie sont sensiblement cylindriques.

Selon une autre caractéristique les moyens de blocage pour maintenir, dans une position d'ouverture déterminée, les ouvrants latéraux de la carrosserie sont des index comportant au moins une partie parallèle à la paroi de l'ouvrant latéral et une partie inclinée par rapport à celle-ci.

Selon une autre variante de l'invention, les moyens de blocage sont des fourches comportant deux doigts.

D'autres caractéristiques et avantages de l'invention apparaîtront à la lecture de la description qui va suivre, en référence aux dessins annexés dans lesquels :
La figure 1 représente, de façon schématique, vue de dessus, une carrosserie automobile située sur une installation de changement de luge, comportant un dispositif d'ouverture des ouvrants et le dispositif de maintien des ouvrants selon l'invention.
La figure 2 représente, de façon schématique, la même carrosserie automobile dans la même situation, vue de face.
La figure 3 représente une luge selon l'invention.
La figure 4 représente une vue partielle en coupe selon l'axe IV-IV de la figure 3.
La figure 5 représente la même vue que la figure 4 selon un second mode de réalisation de l'invention.

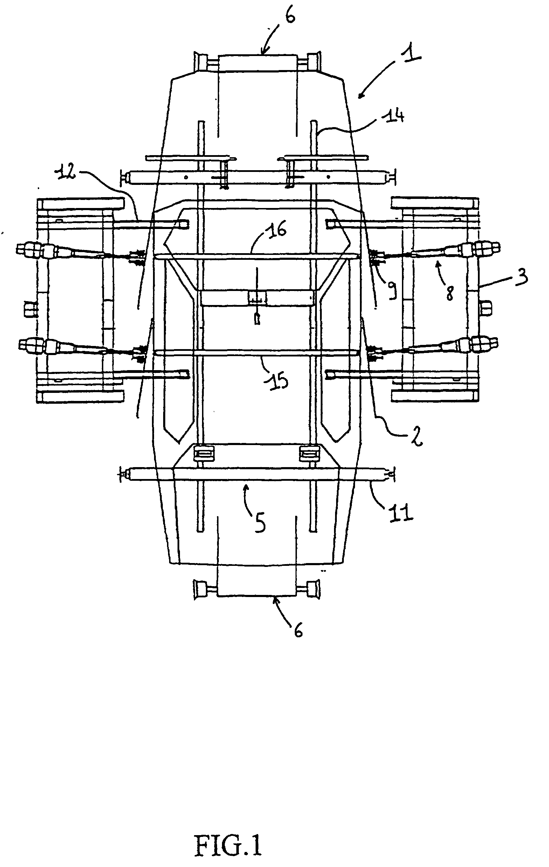

Une carrosserie 1 est amenée à une installation de changement de luge, représentée sur la figure 1, par un convoyeur 6, représenté en partie, à l'extrémité avant et arrière de la carrosserie automobile 1. Pour la suite de la description, nous considérerons une carrosserie comportant quatre ouvrants 2.

L'installation comporte, pour chaque ouvrant 2, un système d'ouverture d'ouvrants 8. Chaque système comprend un ensemble de ventouses 9, qui peuvent être actionnées par un système de vérins ou tout autre activateur électrique. Les ventouses peuvent être remplacées par des crochets venant se prendre dans la fente de passage de la vitre.

Sur la figure 1, sont représentés, de part et d'autres de la carrosserie automobile 1, deux systèmes d'ouverture d'ouvrants 8. Ceux-ci sont montés sur un support 3 et reliés à une unité de commande, non représentée, qui contient les différentes instructions pour manoeuvrer des systèmes d'ouverture d'ouvrants 8.

Chaque support 3 comporte un dispositif de retenue 12 du véhicule. Celui-ci est constitué, pour chaque support 3, de deux barres s'étendant en saillie du support 3, et possédant, à chacune de leur extrémité, une surface d'appui 13 pouvant venir en contact avec la carrosserie 1. Ce dispositif de retenue 12 peut être mobile et actionné par des moyens non représentés, permettant éventuellement son retrait pour permettre le passage de la carrosserie 1. Ce dispositif de retenue 12 peut être piloté par la même unité de commande manoeuvrant le système d'ouverture d'ouvrants 8.

Le convoyeur 6 est susceptible d'amener, au niveau de l'installation, un dispositif de support de carrosserie et de maintien d'ouvrant 5, appelé luge cataphorèse 5.

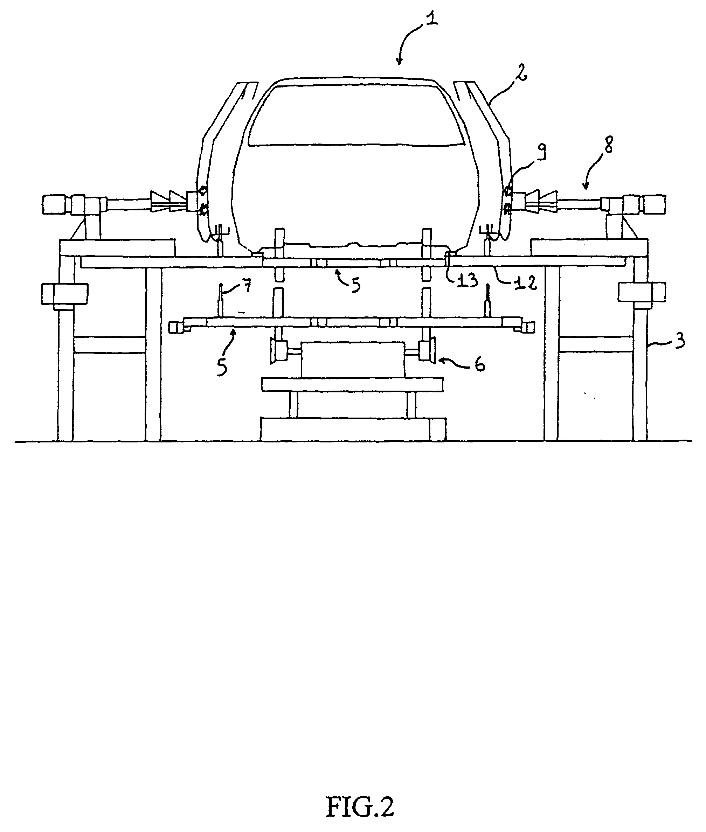

Sur la figure 2, la luge cataphorèse 5 est représentée en position basse, sur le convoyeur 6, et en position haute, montée sur la carrosserie automobile 1.

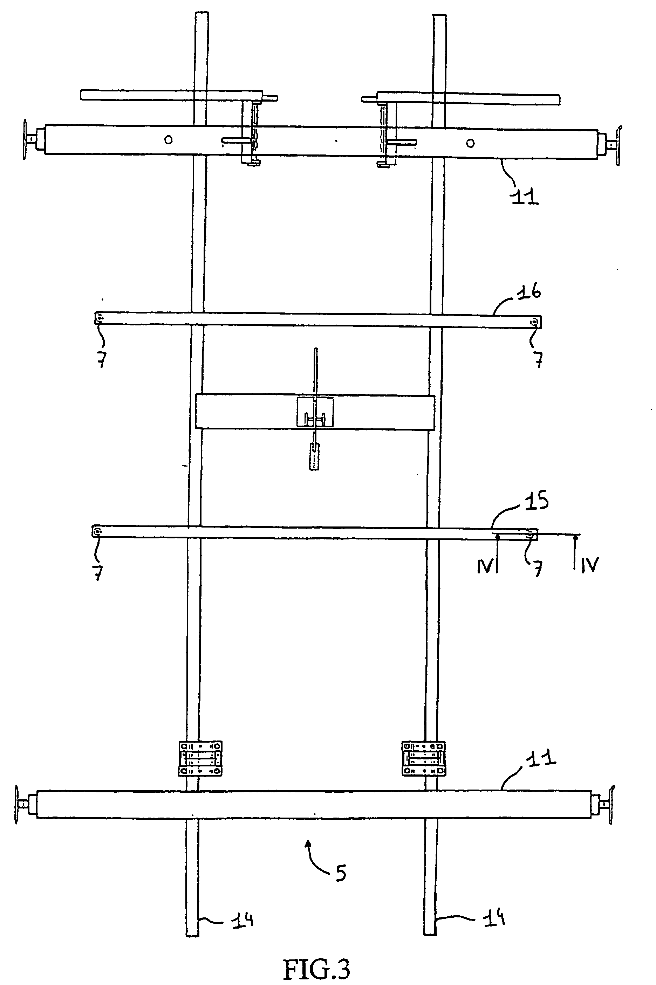

La figure 3, représente une luge cataphorèse 5 selon la présente invention. Celle-ci se compose de deux longerons principaux 14, sur lesquels sont fixés différents longerons transversaux 15, 16 et 11. Deux longerons transversaux 11, l'un situé à l'avant, l'autre à l'arrière de la luge 5, permettent le convoyage aérien de la luge 5. A cette fin, ils disposent à leur extrémité, d'agencements particuliers sur lesquels peuvent venir se fixer un convoyeur aérien, non représenté.

La luge 5 comporte deux autres longerons transversaux 15 et 16, sur lesquels sont fixés les systèmes de maintien 7 des ouvrants latéraux 2 dans une position ouverte déterminée. Le longeron 15 correspond aux ouvrants latéraux 2 arrières, le second 16 aux ouvrants latéraux avants.

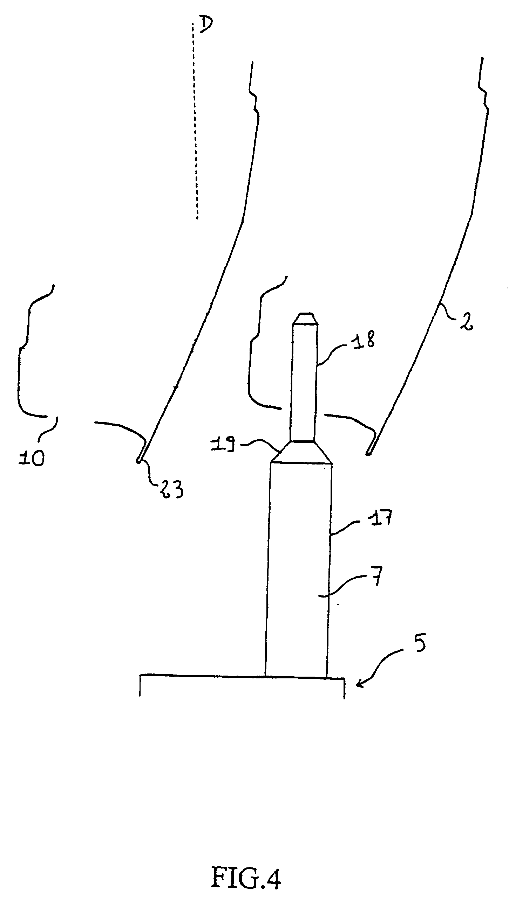

La figure 4 montre plus en détail un mode de réalisation du système de maintien 7 des ouvrants latéraux. Chaque système de maintien 7 se compose d'un doigt. Ce doigt 7 comporte une base sensiblement cylindrique 17, reliée, par une partie tronconique 19, à une extrémité 18, sensiblement cylindrique, de diamètre inférieur.

Dans la partie basse de chaque ouvrant latéral 2 est réalisée une ouverture 10. La figure 4 permet de visualiser le centre et le diamètre moyen d'une telle ouverture 10. Ce diamètre est supérieur à celui de l'extrémité d'un doigt 18, qui est donc, comme cela est représenté sur la figure 4, susceptible de pénétrer à l'intérieur de cette ouverture 10, lorsque l'ouvrant 2 est dans une position ouverte déterminée.

Cette même figure montre les positions respectives d'un ouvrant latéral 2 et d'un système de maintien 7 lorsque l'ouvrant 2 est en position ouverte, le doigt 7 ayant été introduit dans l'ouverture 10, et en position fermée. L'axe D représente l'axe de la charnière de l'ouvrant 2 en question.

Le procédé d'ouverture des ouvrants 2 et de maintien en position ouverte de ces ouvrants 2 est le suivant : l'installation représentée sur la figure 1 est utilisée pour changer la luge sur laquelle la carrosserie 1 est convoyée. La carrosserie arrive à l'installation sur une luge, dite luge de tôlerie, et elle quitte l'installation sur la luge cataphorèse 5. Pendant cette opération de changement de luge, les ouvrants 2 sont ouverts et maintenus en position ouverte.

Arrivée au niveau de l'installation, la carrosserie 1 est positionnée au niveau du dispositif de retenue 12. Ceci peut être réalisé de deux manières. L'arrivée de la carrosserie 1 peut se faire directement en position haute. Le convoyeur 6 est alors, lui-même, en position haute. Le convoyeur 6 descend ensuite en position basse, ainsi que la luge tôlerie, tandis que la carrosserie est maintenue en position haute au moyen du dispositif de retenue 12.

L'arrivée de la carrosserie, sur la luge tôlerie, peut aussi se faire en position basse. Dans ce cas, l'ensemble convoyeur, luge tôlerie et carrosserie est élevé en position haute, la carrosserie est retenue par le dispositif de retenue 12 pendant que l'ensemble convoyeur et luge tôlerie regagne la position basse.

Une fois le convoyeur 6 et la luge tôlerie en position basse, la luge de tôlerie est évacuée par le convoyeur 6, elle est remplacée par la luge cataphorèse 5 qui prend position sur le convoyeur 6 pour sa mise en place ultérieure sur la carrosserie 1.

Les systèmes d'ouverture 8 des ouvrants latéraux 2 sont actionnés selon les instructions programmées dans l'unité de commande. Les ventouses 9 sont fixées sur les parois verticales des ouvrants 2. Les ouvrants 2 sont ouverts jusqu'à une position déterminée préalablement et intégrée dans l'unité de commande.

Une fois les ouvrants 2 convenablement ouverts, le convoyeur 6, sur lequel est disposée la luge cataphorèse 5, passe de sa position basse à sa position haute. Lors de ce mouvement de montée, les doigts 7, de la luge cataphorèse 5, s'introduisent chacun dans les ouvertures 10 correspondantes des ouvrants 2.

Une fois en position haute, les moyens assurant le convoyage aérien sont fixés aux extrémités des longerons transversaux 11 de la luge cataphorèse 5. La carrosserie automobile 1 peut alors être transportée jusqu'à la cuve pour le traitement de surface.

Les ouvertures 10 facilitent, lors de la sortie du bain de cataphorèse, l'évacuation de la solution de traitement qui a pénétré à l'intérieur de chaque ouvrant 2. Une fois le traitement réalisé et que les doigts 7 ont été retirés des ouvertures 10, des bouchons sont mis en place pour fermer les ouvertures 10.

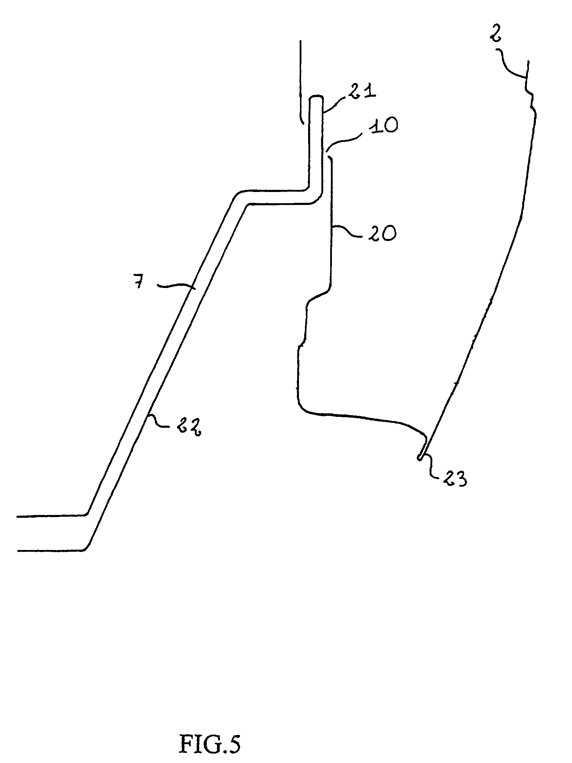

Un autre mode de réalisation de la présente invention est représenté sur la figure 5. Il consiste à pratiquer les ouvertures 10, non pas sur les parties basses des ouvrants 2, mais sur leurs parois verticales, du côté intérieur. Pour cela, un embouti 20 est pratiqué dans la paroi verticale, dégageant une paroi inclinée supérieure et inférieure de part et d'autre de la paroi verticale emboutie. Dans la paroi inclinée supérieure est réalisée une ouverture 10, par exemple par poinçonnage.

Dans ce second mode de réalisation, le système de maintien 7 est un index comportant une première partie inclinée 22 et une seconde partie verticale 21, cette dernière étant susceptible de s'introduire dans l'ouverture 10. La chronologie des mouvements permettant l'accrochage d'une porte est, dans ce second mode, différente.

La luge cataphorèse 5 est montée légèrement en dessous de sa position haute, les ouvrants latéraux 2 étant encore en position fermée. Les ouvrants sont mis en position ouverte déterminée par les systèmes d'ouverture d'ouvrants 8 de telle façon que la partie verticale 21 de chaque index 7 vienne pratiquement en contact avec la paroi verticale emboutie 20 correspondante de chaque ouvrant 2. Finalement, la luge cataphorèse 5 est montée à sa position haute définitive, ce mouvement ayant pour conséquence d'introduire dans l'ouverture 10, la partie verticale supérieure 21 de chaque index 7. Les autres étapes du procédé d'ouverture et de maintien des ouvrants de la carrosserie automobile 1 restent les mêmes que celles du premier mode de réalisation.

Un troisième mode de réalisation, non représenté sur les figures, consiste à utiliser un système de maintien 7 ayant une forme de fourche à deux dents, cette fourche 7 étant positionnée à l'extrémité inférieure 23 de l'ouvrant 2, au niveau du sertissage, entre le panneau extérieur et le caisson de l'ouvrant 2, qui forme une saillie par rapport au reste de l'ouvrant. La fourche 7 est placée de façon à ce que cette saillie 23 puisse venir en butée contre les dents de la fourche 7. Dans ce mode de réalisation, il n'est plus nécessaire de pratiquer une ouverture 10 dans chaque ouvrant 2.

Afin de faciliter l'utilisation de l'installation réalisant le procédé décrit dans la présente invention, pour différents types de carrosserie automobile comportant le même nombre d'ouvrants latéraux 2, il est judicieux, pour chaque type de carrosserie automobile, d'entrer des paramètres de programmation différents dans le programme de contrôle des dispositifs d'ouverture 8 de telle sorte que l'ouverture se fasse, pour chaque type de carrosserie automobile, à une position déterminée différente, de façon à ce qu'il ne soit pas nécessaire de modifier la position des systèmes de maintien 7 sur la luge cataphorèse 5 pour chaque type de carrosserie.

La présente description est basée sur une carrosserie comportant 4 ouvrants latéraux. Evidemment, il est possible d'adapter la luge cataphorèse 5 en fonction du nombre d'ouvrants 2. Il faudra pour cela, ajouter autant de longerons transversaux 15,16 supportant les systèmes de maintien 7, ainsi que des systèmes d'ouverture 8, que nécessaire.

La présente invention permet donc d'automatiser, de façon simple, les étapes d'ouverture et de maintien des ouvrants latéraux de la carrosserie d'un véhicule automobile avant un traitement de surface

## Revendications

1. Procédé d'ouverture et de maintien d'ouvrants latéraux (2) d'une carrosserie (1) de véhicule automobile, ladite carrosserie (1) étant déposée sur une luge (5) de transport d'un convoyeur (6) venant immerger la carrosserie (1) dans un bain de cataphorèse, **caractérisé en ce que**, préalablement à la mise en place de la carrosserie (1) sur la luge (5), les ouvrants latéraux (2) sont amenés, dans une position d'ouverture déterminée, par un système automatique d'ouverture d'ouvrants (8), puis sont maintenus dans cette position d'ouverture par des moyens de blocage (7), portés par la luge (5), et, coopérant avec lesdits ouvrants (2), lors de la mise en place de la carrosserie (1) sur la luge (5).

2. Procédé d'ouverture et de maintien d'ouvrants latéraux (2) de carrosserie (1) de véhicule automobile selon la revendication 1, **caractérisé en ce que** le maintien des ouvrants latéraux (2) est réalisé par l'introduction dans des ouvertures (10) pratiquées sur les ouvrants latéraux (2), des moyens de blocage (7), portés par ladite luge (5).

3. Procédé d'ouverture et de maintien d'ouvrants latéraux (2) de carrosserie (1) de véhicule automobile selon la revendication 2, **caractérisé en ce que** les ouvertures (10) sont réalisées sur la partie basse de chaque ouvrant latéral (2).

4. Procédé d'ouverture et de maintien dans une position ouverte déterminée d'ouvrants latéraux de carrosserie automatique selon la revendication 2, **caractérisé en ce que** les ouvertures (10) sont réalisées sur la partie verticale intérieure ou extérieure de chaque ouvrant latéral (2).

5. Procédé d'ouverture et de maintien d'ouvrants latéraux (2) de carrosserie de véhicule automobile selon l'une quelconque des revendications 1 à 4, **caractérisé en ce que** le système automatique d'ouverture d'ouvrants (8) comprend des ventouses (9).

6. Procédé d'ouverture et de maintien d'ouvrants latéraux (2) de carrosserie de véhicule automobile selon l'une quelconque des revendications 1 à 5, **caractérisé en ce que** chaque ouvrant latéral (2) est adapté pour recevoir une vitre pouvant se déplacer par une fente de passage, réalisée sur l'ouvrant (2), d'une position d'ouverture à une position de fermeture, et **en ce que** le système automatique d'ouverture d'ouvrants (8) amène les ouvrants latéraux (2) dans une position d'ouverture déterminée au moyen de crochets venant se prendre dans la fente de passage de l'ouvrant (2).

7. Dispositif de support et de maintien de carrosserie (1) de véhicule automobile, **caractérisé en ce qu'**il comporte des moyens de blocage (7) pour maintenir, dans une position d'ouverture déterminée, les ouvrants latéraux (2) de la carrosserie (1).

8. Dispositif de support et de maintien de carrosserie de véhicule automobile selon la revendication 7, **caractérisé en ce que** les moyens de blocage (7) pour maintenir, dans une position d'ouverture déterminée, les ouvrants latéraux (2) de la carrosserie (1) sont des doigts, comportant au moins une partie cylindrique (18).

9. Dispositif de support et de maintien d'ouvrants latéraux (2) de carrosserie (1) de véhicule automobile selon la revendication 7, **caractérisé en ce que** les moyens de blocage (7) pour maintenir, dans une position d'ouverture déterminée, les ouvrants latéraux (2) de la carrosserie (1) sont des index comportant au moins une partie parallèle à la paroi de l'ouvrant latéral (2) et une partie inclinée par rapport à celle-ci.

10. Dispositif de support et de maintien d'ouvrants latéraux (2) de carrosserie (1) de véhicule automobile selon la revendication 7, **caractérisé en ce que** les moyens de blocage (7) pour maintenir, dans une position d'ouverture déterminée, des ouvrants latéraux (2) de la carrosserie (1) sont des fourches comportant deux doigts.

## Patentansprüche

1. Verfahren zum Öffnen und zum Halten von seitlichen Türflügeln (2) einer Karosserie (1) eines Kraftfahrzeugs, wobei die Karosserie (1) auf einem Transportschlitten (5) eines Förderbandes (6) aufgesetzt ist, welches die Karosserie (1) in ein Kataphorese-Bad eintaucht, **dadurch gekennzeichnet, dass** vor dem Aufsetzen der Karosserie (1) auf dem Schlitten (5) die seitlichen Türflügel (2) in eine bestimmte Öffnungsposition geführt werden, durch ein automatisches System zum Öffnen von Türflügeln (8), und dann in dieser Öffnungsposition gehalten werden durch Blockiermittel (7), welche von dem Schlitten (5) getragen werden und mit den Türflügeln (2) zusammenwirken bei dem Aufsetzen der Karosserie (1) auf dem Schlitten (5).

2. Verfahren zum Öffnen und zum Halten seitlicher Türflügel (2) einer Karosserie eines Kraftfahrzeugs gemäß Anspruch 1, **dadurch gekennzeichnet, dass** das Halten der seitlichen Türflügel (2) verwirklicht wird durch Einführen von Blockiermitteln (7), welche durch den Schlitten (5) getragen werden, in Öffnungen (10), welche auf den seitlichen Türflügeln (2) angelegt sind.

3. Verfahren zum Öffnen und Halten von seitlichen Türflügeln (2) einer Karosserie (1) eines Kraftfahrzeugs gemäß Anspruch 2, **dadurch gekennzeichnet, dass** die Öffnungen (10) auf dem unteren Bereich jedes seitlichen Türflügels (2) ausgeführt sind.

4. Automatisches Verfahren zum Öffnen und Halten von seitlichen Türflügeln (2) einer Karosserie (1) in einer bestimmten geöffneten Position gemäß Anspruch 2, **dadurch gekennzeichnet, dass** die Öffnungen (10) verwirklicht werden auf dem inneren oder äußeren vertikalen Bereich jedes seitlichen Türflügels (2).

5. Verfahren zum Öffnen und Halten von seitlichen Türflügeln (2) einer Karosserie (1) eines Kraftfahrzeugs gemäß einem der Ansprüche 1 bis 4, **dadurch gekennzeichnet, dass** das automatische System zur Öffnung von Türflügeln (8) Saugnäpfe (9) umfasst.

6. Verfahren zum Öffnen und Halten von seitlichen Türflügeln (2) einer Karosserie (1) eines Kraftfahrzeugs gemäß einem der Ansprüche 1 bis 5, **dadurch gekennzeichnet, dass** jeder seitliche Türflügel (2) angepasst ist, eine Fensterscheibe zu empfangen, welche über einen Durchgangsschlitz beweglich sind, welcher auf dem Türflügel (2) verwirklicht ist, von einer Öffnungsposition zu einer Schließposition, und dadurch, dass das automatische System zur Öffnung von Türflügeln (8) die seitlichen Türflügel (2) mittels Haken in eine bestimmte Öffnungsposition führt, welche in den Durchgangsschlitz des Türflügels (2) einhaken.

7. Vorrichtung zum Aufsetzen und Halten der Karosserie (1) des Kraftfahrzeugs, **dadurch gekennzeichnet, dass** sie Blockiermittel (7) zum Halten der seitlichen Türflügel (2) der Karosserie (1) in einer bestimmten Öffnungsposition aufweist.

8. Vorrichtung zum Aufsetzen und Halten der Karosserie des Kraftfahrzeugs gemäß Anspruch 7, **dadurch gekennzeichnet, dass** die Blockiermittel (7) zum Halten der seitlichen Türflügel (2) der Karosserie (1) in einer bestimmten Öffnungsposition Finger sind, die mindestens eine zylindrische Partie (18) aufweisen.

9. Vorrichtung zum Aufsetzen und Halten der Karosserie (1) des Kraftfahrzeugs gemäß Anspruch 7, **dadurch gekennzeichnet, dass** die Blockiermittel (7) zum Halten der seitlichen Türflügel (2) der Karosserie (1) in einer bestimmten Öffnungsposition Zungen sind, die mindestens einen Bereich parallel zu der Wand des seitlichen Türflügels (2) und eine im Verhältnis hierzu geneigte Partie aufweisen.

10. Vorrichtung zum Aufsetzen und Halten der Karosserie (1) des Kraftfahrzeugs gemäß Anspruch 7, **dadurch gekennzeichnet, dass** die Blockiermittel (7) zum Halten der seitlichen Türflügel (2) der Karosserie (1) in einer bestimmten Öffnungsposition Gabeln sind mit zwei Zinken.

## Claims

1. A process for opening and holding side doors (2) of a motor vehicle body (1), said body (1) being deposited on a transport sledge (5) of a conveyor (6) for immersing the body (1) in a cataphoresis bath, **characterised in that**, prior to the body (1) being set in place on the sledge (5), the side doors (2) are moved into a given open position by an automatic system (8) for opening doors, and are then held in said open position by blocking means (7) which are carried by said sledge (5) and co-operate with said doors (2) when the body (1) is set in place on the sledge (5).

2. A process for opening and holding side doors (2) of a motor vehicle body (1) according to claim 1 **characterised in that** holding of the side doors (2) is implemented by introducing blocking means (7) carried by said sledge (5) into openings (10) on the side doors (2).

3. A process for opening and holding side doors (2) of a motor vehicle body (1) according to claim 2 **characterised in that** the openings (10) are provided on the bottom part of each side door (2).

4. An automatic process for opening and holding body side doors in a given open position according to claim 2 **characterised in that** the openings (10) are provided on the internal or external vertical part of each side door (2).

5. A process for opening and holding side doors (2) of a motor vehicle body (1) according to any one of claims 1 to 4 **characterised in that** the automatic door opening system (8) comprises suction cups.

6. A process for opening and holding side doors (2) of a motor vehicle body (1) according to any one of claims 1 to 5 **characterised in that** each side door (2) is adapted to receive a window which is displaceable by way of a passage slot provided on the door (2) from an open position to a closed position and that the automatic door opening system (8) moves the side doors (2) into a given open position by means of hooks which engage into the passage slot of the door (2).

7. Apparatus for supporting and holding a motor vehicle body (1) **characterised in that** it comprises blocking means (7) for holding the side doors (2) of the body (1) in a given open position.

8. A motor vehicle body support and holding apparatus according to claim 7 **characterised in that** the blocking means (7) for holding the side doors (2) of the body (1) in a given open position are fingers comprising at least a cylindrical portion (18).

9. Apparatus for supporting and holding side doors (2) of a motor vehicle body (1) according to claim 7 **characterised in that** the blocking means (7) for holding the side doors (2) of the body (1) in a given open position are indexes comprising at least a portion which is parallel to the wall of the side door (2) and a portion which is inclined with respect thereto.

10. Apparatus for supporting and holding side doors (2) of a motor vehicle body (1) according to claim 7 **characterised in that** the blocking means (7) for holding side doors (2) of the body (1) in a given open position are forks comprising two fingers.
